# EUROPEAN PATENT SPECIFICATION

(11) **EP 3 468 282 B1**
(45) Date of publication and mention of the grant of the patent: **09.03.2022**
(21) Application number: 16916491.0
(22) Date of filing: 22.09.2016
(51) Int. Cl.: H04W 48/12, H04W 56/00

(54) **METHODS FOR TRANSMITTING SYSTEM INFORMATION, NETWORK DEVICE, AND TERMINAL DEVICE**
VERFAHREN ZUR ÜBERTRAGUNG VON SYSTEMINFORMATIONEN, NETZWERKVORRICHTUNG UND ENDGERÄTEVORRICHTUNG
PROCÉDÉS DE TRANSMISSION D'INFORMATIONS SYSTÈME, DISPOSITIF DE RÉSEAU, ET DISPOSITIF TERMINAL

(43) Date of publication of application: 10.04.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN); XU, Hua, Ottawa, Ontario K2M 1N6 (CA)
(74) Representative: Manitz Finsterwald Patent- und Rechtsanwaltspartnerschaft mbB
(86) International application number: PCT/CN2016/099722
(87) International publication number: WO 2018/053752

(56) References cited:
- EP-A1- 3 448 098
- WO-A1-2015/080646
- CN-A- 101 202 585
- CN-A- 102 291 845
- CN-A- 103 152 830
- US-A1- 2009 191 885
- US-A1- 2013 195 069
- US-B2- 8 630 216

## Description

### TECHNICAL FIELD

Embodiments of the present disclosure relate to the field of wireless communications, and, more particularly, to methods for transmitting system information, a network device, and a terminal device.

### BACKGROUND

Before accessing a system, a terminal device obtains system information from base station broadcast messages, and obtains basic information, such as carrier bandwidth, of a cellular system where the base station is located. However, the base station broadcasts system information only in a fixed period, and thus a certain time delay exists when the terminal device obtains system information. In a current 5G communication system, there are two types of terminal devices with different requirements, and each of them has different requirements for broadcasting system information. One type of terminal device has high requirement for data transmission delay and needs to acquire system information quickly so as to access the system. Another type of terminal device has low cost, low power consumption, and limited bandwidth for demodulation, but it has low requirements for data transmission delay and can periodically acquire system information.

US2009/0191885 A1 discloses the division of the available frequency band into segments and the BCH data into blocks and the transmission of BCH blocks in different frequency segments and related technologies are known from WO 2015080646A1 and US 2013/ 0195069 A1 .

It should be noted that the information disclosed in the background section above is only for enhancing the understanding of the background of the present disclosure, and thus may include information that does not constitute prior art known to those of ordinary skill in the art.

### SUMMARY

Embodiments of the present disclosure provide methods for transmitting system information, a network device, and a terminal device, which may meet different requirements of different types of terminal devices for acquiring system information simultaneously.

The methods and apparatuses according to the present invention are defined in the independent claims, and the preferable features according to the present invention are defined in the dependent claims.

In claim 6 there is provided a method for transmitting system information, including:
a network device determining time-frequency resources for transmitting n groups of system information, wherein an i-th group of system information in the n groups of system information occupies continuous system information frequency-domain resources in a frequency domain, and system information time-domain resources occupied by system information in the i-th group of system information are different from each other in respective frequency-domain resources, and the i-th group of system information comprises k pieces of system information, where n is a positive integer, k is a positive integer, and i is a positive integer less than or equal to n;the network device sending the n groups of system information on the time-frequency resources, and wherein the system information in the i-th group of system information occupies continuous system information time-domain resources, and wherein n groups of system information are mapped to time-domain resources and frequency-domain resources in a cyclically shifted manner.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, k is less than or equal to n.

Optionally, the method further includes: the network device sending indication information carried in the i-th group of system information, wherein the indication information is used to indicate a time-frequency resource of each piece of system information in the n groups of system information.

Optionally, the network device sending indication information carried in the i-th group of system information includes: the network device sending indication information carried in the i-th group of system information according to an interval between the indication information and specific system information in a time domain and/or a frequency domain.

Optionally, the specific system information includes a primary synchronization signal PSS or a secondary synchronization signal SSS.

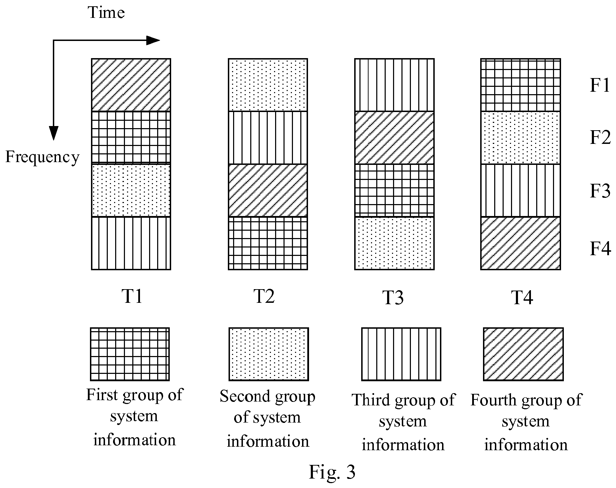

It should be understood that the system information time-domain resource in the embodiment of the present disclosure is a time-domain resource configured by the network device for transmitting system information, and the system information time-domain resource may be a time-domain resource distributed according to a preset rule in a time domain. For example, T1, T2, T3, T4 shown in Fig. 3 to Fig. 7 are continuous system information time-domain resources. The system information frequency-domain resource in the embodiment of the present disclosure is a frequency-domain resource configured by the network device for transmitting system information, and the system information frequency-domain resource may be a frequency-domain resource distributed according to a preset rule in a frequency domain. For example, F1, F2, F3, and F4 shown in Fig.3 to Fig. 7 are continuous system information frequency-domain resources.

In one aspect, there is provided a network device, which can be used to perform various processes performed by the network device in the method for transmitting system information in the foregoing aspect and various implementations. The network device includes a processor and a transceiver as detailed in claim 13.

In claim 1 there is provided method for transmitting system information, including:
a terminal device determining time-frequency resources for receiving n groups of system information, wherein an i-th group of system information in the n groups of system information occupies continuous system information time-domain resources in a time domain, and system information frequency-domain resources occupied by system information in the i-th group of system information are different from each other in respective time-domain resources, and the i-th group of system information comprises k pieces of system information, where n is a positive integer, k is a positive integer, and i is a positive integer less than or equal to n;the terminal device receiving the n groups of system information sent by a network device on the time-frequency resources,wherein the system information in the i-th group of system information occupies continuous system information frequency-domain resources, and wherein n groups of system information aremapped to time-domain resources and frequency-domain resources in a cyclically shifted manner.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, k is less than or equal to n.

Optionally, before the terminal device receiving the n groups of system information sent by a network device on the time-frequency resources, the method further includes: the terminal device receiving indication information carried in the i-th group of system information sent by the network device, wherein the indication information is used to indicate a time-frequency resource of each piece of system information in the n groups of system information;
wherein the terminal device receiving the n groups of system information sent by a network device on the time-frequency resources includes: the terminal device receiving the n groups of system information sent by the network device on the time-frequency resources according to the indication information.

Optionally, the terminal device receiving indication information carried in the i-th group of system information sent by the network device includes: the terminal device receiving indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

In claim 8 there is provided a method for transmitting system information, including:

A method for transmitting system information, comprising:a terminal device determining time-frequency resources for receiving n groups of system information, wherein an i-th group of system information in the n groups of system information occupies continuous system information frequency-domain resources in a frequency domain, and system information time-domain resources occupied by system information in the i-th group of system information are different from each other in respective frequency-domain resources, and the i-th group of system information comprises k pieces of system information, where n is a positive integer, k is a positive integer, and i is a positive integer less than or equal to n;the terminal device receiving the n groups of system information sent by a network device on the time-frequency resources.wherein the system information in the i-th group of system information occupies continuous system information time-domain resources, and wherein n groups of system information are mapped to time-domain resources and frequency-domain resources in a cyclically shifted manner.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, before the terminal device receiving the n groups of system information sent by a network device on the time-frequency resources, the method further includes:
the terminal device receiving indication information carried in the i-th group of system information sent by the network device, wherein the indication information is used to indicate a time-frequency resource of each piece of system information in the n groups of system information;
wherein the terminal device receiving the n groups of system information sent by a network device on the time-frequency resources includes:
the terminal device receiving the n groups of system information sent by the network device on the time-frequency resources according to the indication information.

Optionally, the terminal device receiving indication information carried in the i-th group of system information sent by the network device includes:
the terminal device receiving indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

Other features and advantages of the present disclosure will be apparent from the following detailed description, or be acquired in part by the practice of the present disclosure.

It should be understood that the above general description and the following detailed description are merely exemplary and explanatory, and are not limiting of the present disclosure.

### BRIEF DESCRIPTION OF THE DRAWINGS

In order to more clearly illustrate technical solutions of embodiments of the present disclosure, the drawings to be used in the embodiments of the present disclosure will be briefly described below. It is obvious that the drawings in the following description are only some embodiments of the present disclosure. Those skilled in the art can also obtain other drawings based on these drawings without paying any creative work.
Fig. 1 is a schematic structural diagram of an application scenario according to the present disclosure.
Fig. 2 is a flow interaction diagram of a method for transmitting system information according to the present disclosure.
Fig. 3 is a schematic diagram of time-frequency resources for transmitting system information according to the present disclosure.
Fig. 4 is a schematic diagram of time-frequency resources for transmitting system information according to the present disclosure.
Fig. 5 is a schematic diagram of time-frequency resources for transmitting system information according to the present disclosure.
Fig. 6 is a schematic diagram of time-frequency resources for transmitting system information according to the present disclosure.
Fig. 7 is a schematic diagram of time-frequency resources for transmitting system information according to the present disclosure.
Fig. 8 is a structural block diagram of a network device according to the present disclosure.
Fig. 9 is a structural block diagram of a network device according to the present disclosure.
Fig. 10 is a schematic structural diagram of a system chip according to the present disclosure.
Fig. 11 is a structural block diagram of a terminal device according to the present disclosure.
Fig. 12 is a structural block diagram of a terminal device according to the present disclosure.
Fig. 13 is a schematic structural diagram of a system chip according to the present disclosure.
Fig. 14 is a structural block diagram of a network device according to the present disclosure.
Fig. 15 is a structural block diagram of a network device according to the present disclosure.
Fig. 16 is a schematic structural diagram of a system chip according to the present disclosure.
Fig. 17 is a structural block diagram of a terminal device according to the present disclosure.
Fig. 18 is a structural block diagram of a terminal device according to the present disclosure.
Fig. 19 is a schematic structural diagram of a system chip according to the present disclosure.

### DETAILED DESCRIPTION

The technical solutions in the embodiments of the present disclosure will be clearly and completely described in the following with reference to the accompanying drawings in the embodiments of the present disclosure.

It should be understood that the technical solutions of the embodiments of the present disclosure can be applied to various communication systems, for example, Global System of Mobile communication ("GSM") system, Code Division Multiple Access ("CDMA") System, Wideband Code Division Multiple Access ("WCDMA") system, General Packet Radio Service ("GPRS"), Long Term Evolution ("LTE") system, Universal Mobile Telecommunication System ("UMTS"), and other current communication systems, and especially for future 5G systems.

The terminal device in the embodiment of the present disclosure may also be referred to as a User Equipment ("UE"), an access terminal, a subscriber unit, a subscriber station, a mobile station, a mobile platform, a remote station, a remote terminal, a mobile device, a user terminal, a terminal, a wireless communication device, a user agent or a user device. The access terminal may be a cellular phone, a cordless phone, a Session Initiation Protocol ("SIP") phone, a Wireless Local Loop ("WLL") station, a Personal Digital Assistant ("PDA"), a handheld device with wireless communication capabilities, a computing device or other processing device connected to a wireless modem, an in-vehicle device, a wearable device, a terminal device in a future 5G network, or a terminal device in a future evolved Public Land Mobile Network ("PLMN") or the like.

The network device in the embodiment of the present disclosure may be a device communicating with a terminal device, where the network device may be a Base Transceiver Station ("BTS") in GSM or CDMA, or a base station NodeB ("NB") in a WCDMA system, or an Evolutional NodeB ("eNB or eNodeB") in the LTE system, or a wireless controller in a Cloud Radio Access Network (CRAN) scenario, or a relay station, an access point, an in-vehicle device, a wearable device, and a network device in a future 5G communication network or a network device in a future evolved PLMN network, or the like.

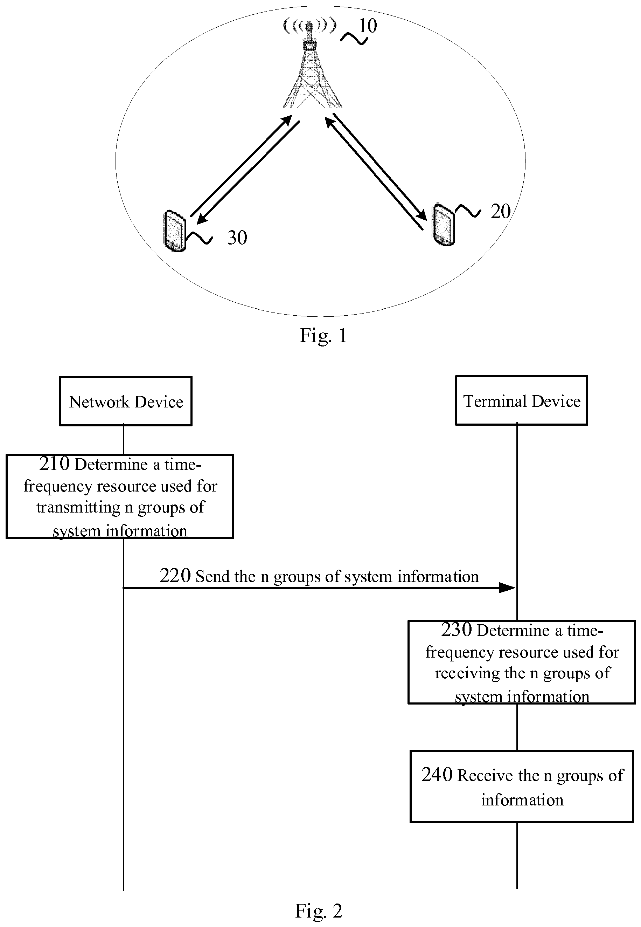

Fig. 1 is a schematic structural diagram of an application scenario according to the present disclosure. A basic network architecture of a communication system as shown in Fig. 1 may include a network device such as eNodeB 10, and at least one terminal device such as UE 20 and UE 30. As shown in Fig. 1, the eNodeB 10 is configured to provide communication services for the UE 20 and the UE 30, and access a core network. The UE 20 and the UE 30 access the network by searching for synchronization signals, broadcast signals, and the like sent by the eNodeB 10, thus communicating with the network. At least one terminal device in the communication system may have different requirements for acquiring system information when acquiring system information sent by the network device. For example, the UE 20 may be a terminal device that has high requirement for data transmission delay, and the UE 20 needs to quickly acquire system information to access the system; while the UE 30 can be a type of terminal device with low cost and low power consumption and can demodulate limited bandwidth, but it has low requirement for data transmission delay, and can periodically acquire system information. In the embodiment of the present disclosure, when the network device broadcasts system information, it can meet different requirements of different types of terminal devices for acquiring system information simultaneously.

In the present disclosure, the network may refer to a Public Land Mobile Network ("PLMN") or a Device to Device ("D2D") network or a Machine to Machine/Man ("M2M") network or other networks. Fig. 1 is only an example of an application scenario of the embodiment of the present disclosure, and the embodiment of the present disclosure can also be applied to other scenarios. In addition, Fig. 1 is only a simplified schematic diagram of an example, other network devices may also be included in the network, which are not shown in Fig. 1.

Fig. 2 is a flow interaction diagram of a method for transmitting system information according to the present disclosure. The terminal device and the network device are shown in Fig. 2. For example, the terminal device may be the UE 20 or the UE 30 shown in Fig. 1, and the network device may be the eNodeB 10 shown in Fig. 1. As shown in Fig. 2, the specific process of the method for transmitting system information includes following steps.

210, the network device determines time-frequency resources for transmitting n groups of system information.

An i-th group of system information in the n groups of system information occupies continuous system information time-domain resources in a time domain, and system information frequency-domain resources occupied by system information in the i-th group of system information are different from each other, and the i-th group of system information includes k pieces of system information, where n is a positive integer, k is a positive integer, and i is a positive integer less than or equal to n.

Optionally, k is less than or equal to n.

Specifically, the system information sent by the network device may be divided into different groups, and the system information is mapped to the time-domain resource and the frequency-domain resource in two ways in units of groups. For example, the system information may be arranged in a certain order on the frequency domain in units of groups on the same time-domain resource, and arranged in a certain order on the time domain in units of groups on the same frequency-domain resource.

When different pieces of system information are grouped, the network device can group the system information according to the purpose and category of the system information. For example, system information related to the core network is taken as a group; system information related to neighboring cells may be taken as a group; system information providing parameters related to common physical channels of cells can be used as a group; and system information providing parameters used for terminal measurement can be used as a group.

For example, it is assumed that n=4, k=n. Fig. 3 is a schematic diagram of time-frequency resources for transmitting system information according to an embodiment of the present disclosure. As for time-frequency resources configured by the network device for transmitting n groups of system information, its corresponding system information frequency-domain resources are F1, F2, F3, F4 (arranged from low to high in the frequency domain), its corresponding system information time-domain resources are T1, T2, T3, T4 (arranged from small to large in the time domain), and Fᵢ and Fᵢ₊₁ are continuous frequency-domain resources, and Tⱼ and Tⱼ₊₁ are also consecutive time-domain resources. The time-frequency resource for transmitting system information in the implementation of the present disclosure is also referred to as a resource matrix.

As shown in Fig. 3, when i=1, in the time domain, each piece of system information used for transmitting the first group of system information is sequentially distributed on the system information time-domain resources T1, T2, T3, and T4, and system information frequency-domain resources occupied by each piece of system information distributed on T1, T2, T3, and T4 are different from each other. The system information frequency-domain resource corresponding to the time-frequency resource for transmitting the first group of system information on T1 is F2; the system information frequency-domain resource corresponding to the time-frequency resource for transmitting the first group of system information on T2 is F4; the system information frequency-domain resource corresponding to the time-frequency resource for transmitting the first group of system information on T3 is F3; and the system information frequency-domain resource corresponding to the time-frequency resource for transmitting the first group of system information on T4 is F1.

When i=2, each piece of system information used for transmitting the second group of system information is sequentially distributed on the system information time-domain resources T1, T2, T3, and T4, and system information frequency-domain resources occupied by each piece of system information distributed on T1, T2, T3, and T4 are different from each other. The system information frequency-domain resource for transmitting the second group of system information on T1 is F3; the system information frequency-domain resource for transmitting the second group of system information on T2 is F1; the system information frequency-domain resource for transmitting the second group of system information on T3 is F4; and the system information frequency-domain resource for transmitting the second group of system information on T4 is F2.

When i=3, each piece of system information used for transmitting the third group of system information is sequentially distributed on the system information time-domain resources T1, T2, T3, and T4, and system information frequency-domain resources occupied by each piece of system information distributed on T1, T2, T3, and T4 are different from each other. The system information frequency-domain resource for transmitting the third group of system information on T1 is F4; the system information frequency-domain resource for transmitting the third group of system information on T2 is F2; the system information frequency-domain resource for transmitting the third group of system information on T3 is F1; and the system information frequency-domain resource for transmitting the third group of system information on T4 is F3.

When i=4, each piece of system information used for transmitting the third group of system information is sequentially distributed on the system information time-domain resources T1, T2, T3, and T4, and system information frequency-domain resources occupied by each piece of system information distributed on T1, T2, T3, and T4 are different from each other. The system information frequency-domain resource for transmitting the third group of system information on T1 is F1; the system information frequency-domain resource for transmitting the third group of system information on T2 is F3; the system information frequency-domain resource for transmitting the third group of system information on T3 is F2; and the system information frequency-domain resource for transmitting the third group of system information on T4 is F4.

It can be seen that the terminal device can receive four groups of system information sent by the network device on any of the system information time-domain resources T1, T2, T3, and T4, and the terminal device can also receive four groups of system information sent by the network device on any of the system information frequency-domain resources F1, F2, F3, and F4. When the terminal device has high requirement for data transmission delay, it can quickly acquire all four groups of system information on any time-domain resource of T1, T2, T3, and T4, and then quickly access the system. While when the terminal device can demodulate limited bandwidth but has low requirement for data transmission delay, all four groups system information on T1, T2, T3 and T4 can be received on any frequency-domain resource of F1, F2, F3 and F4.

Therefore, the present disclosure is a method for transmitting system information , which can simultaneously satisfy different requirements of different types of terminal devices for acquiring system information.

It should be understood that the system information time-domain resource in the present disclosure is a time-domain resource configured by the network device for transmitting system information, and the system information time-domain resource may be a time-domain resource distributed according to a preset rule in a time domain. For example, T1, T2, T3, T4 shown in Fig. 3 to Fig. 7 are continuous system information time-domain resources. The system information frequency-domain resource in the present disclosure is a frequency-domain resource configured by the network device for transmitting system information, and the system information frequency-domain resource may be a frequency-domain resource distributed according to a preset rule in a frequency domain. For example, F1, F2, F3, and F4 shown in Fig.3 to Fig. 7 are continuous system information frequency-domain resources.

As another embodiment, the system information in the i-th group of system information occupies continuous system information frequency-domain resources.

Specifically, the time-frequency resource of each piece of system information in the i-th group of system information continuously distributed in the time domain is continuously distributed in the frequency domain. These n groups of system information can be mapped to time-domain resources and frequency-domain resources in a cyclically shifted manner. On a certain time-domain resource, such as T1, the n groups of system information are arranged in the frequency domain in an order; then, on the sequentially adjacent time-domain resources such as T2, T3, T4, the n groups of system information are distributed on the frequency domain by cyclically shifting the arrangement order of the n groups of system information on the time-domain resource T1. On the other hand, on a certain frequency-domain resource, such as F1, the n groups of system information are arranged in the frequency domain in an order; then, on the sequentially adjacent frequency-domain resources such as F2, F3, F4, the n groups of system information are distributed on the time domain by cyclically shifting the arrangement order of the n groups of system information on the frequency-domain resource F1.

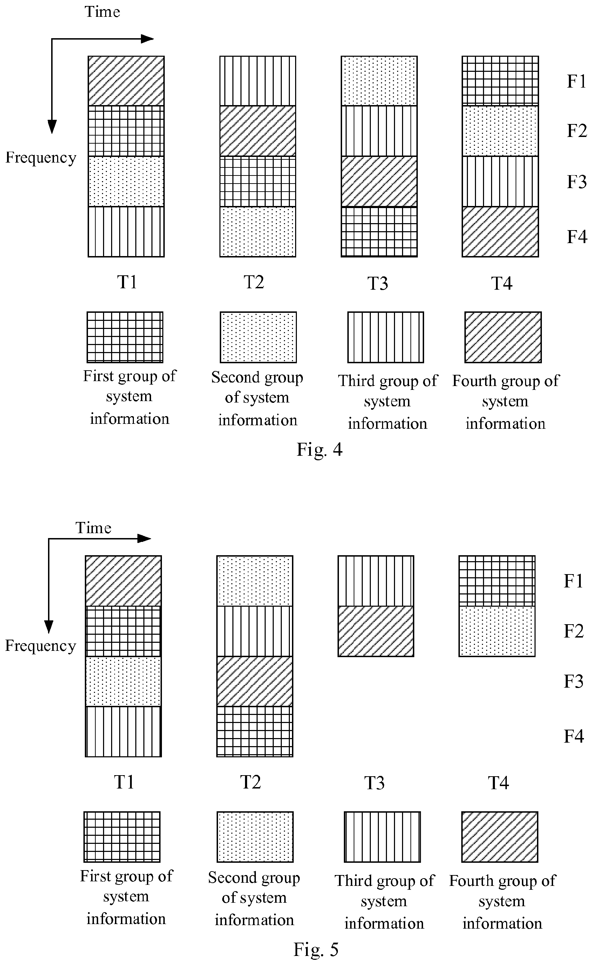

For example, Fig. 4 is a schematic diagram of time-frequency resources for transmitting system information according to the present disclosure. The system information frequency-domain resources used by the n groups of system information on the system information time-domain resource T1 are F2, F3, F4, F1 respectively. Then, on the system information time-domain resource T2, the system information frequency-domain resources used by the n groups of system information are F3, F4, F1, F2 respectively; on the system information time-domain resource T3, the system information frequency-domain resources used by the n groups of system information are F4, F1, F2, and F3 respectively; on the system information time-domain resource T4, the system information frequency-domain resources used by the n groups of system information are F1, F2, F3 and F4 respectively.

Similarly, as shown in Fig. 4, the system information time-domain resources used by the n groups of system information on the system information frequency-domain resource F1 are T4, T3, T2 and T1 respectively. Then, the system information time-domain resources used by the n groups of system information on the system information frequency-domain resource F2 are T1, T4, T3 and T2 respectively; the system information time-domain resources used by the n groups of system information on the system information frequency-domain resource F3 are T2, T1, T4 and T3 respectively; and the system information time-domain resources used by the n groups of system information on the system information frequency-domain resource F4 are T3, T2, T1 and T4 respectively.

In this way, on any of the above-mentioned system information time-domain resources T1, T2, T3 or T4, the terminal device can receive system information of all groups, which is applicable to a terminal device capable of demodulating limited bandwidth but with low latency requirement; on any of the above-mentioned system information frequency-domain resources F1, F2, F3 or F4, the terminal device can also receive system information of all groups, which is applicable to a terminal device that needs to quickly acquire system information.

It should be understood that, in this embodiment, if a plurality of rows and/or columns in the resource matrix shown in Fig. 4 is exchanged arbitrarily, the obtained resource matrix may satisfy that the terminal device can receive all system information on any system information time-domain resource T1, T2, T3 or T4, and can also receive all system information on any system information frequency-domain resource F1, F2, F3 or F4. For example, the resource matrix shown in Fig. 3 can be obtained by exchanging the second column and the third column in the resource matrix shown in Fig. 4.

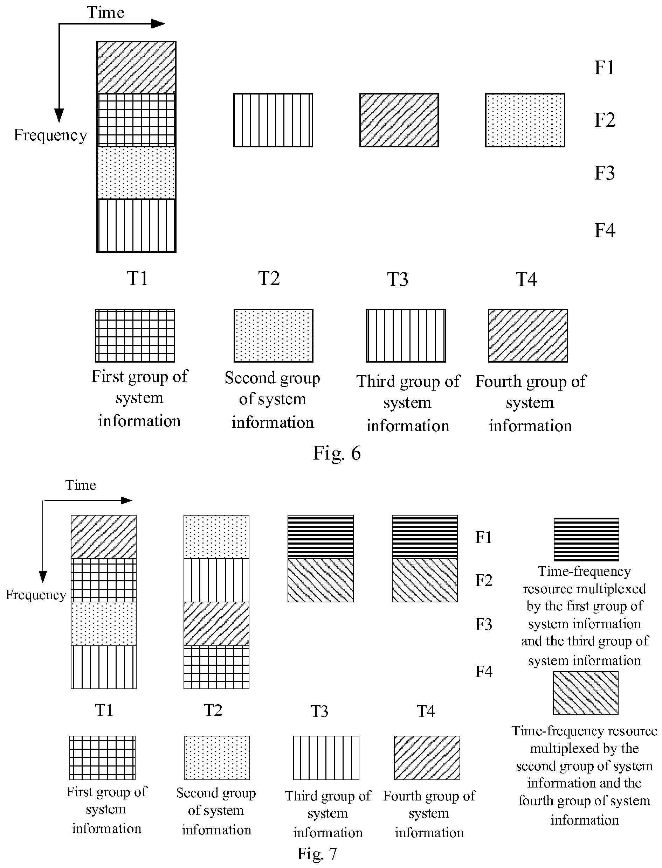

It should also be understood that when certain system information time-domain resources and/or system information frequency-domain resources are unavailable, system information may not be transmitted on the system information time-domain resources and/or system information frequency-domain resources, which matches the case when k<n. For example, in the schematic diagram of the time-frequency resources for transmitting system information in the embodiment of the present disclosure shown in Fig. 5, time-frequency resources of (T3, F3), (T3, F4), (T4, F3), (T4, F4) are not available, then the four time-frequency resources are not used to transmit system information. However, the terminal device can still obtain complete system information on T1, T2, F1 and F2. The resource matrix shown in Fig. 5 can be regarded by combining any row and/or column arbitrarily extracted from aforementioned Fig. 3 or Fig. 4. Extremely, time-frequency resources for transmitting n groups of system information may be distributed only on T1 and F2 as shown in Fig. 6, and the terminal device may detect all 4 groups of system information sent by the network device on the system information time-domain resource T1 and the system information frequency-domain resource F2.

Further, since the four time-frequency resources (T3, F3), (T3, F4), (T4, F3), (T4, F4) are not available, the system information originally configured to transmit on the four time-frequency resources may multiplex the same time-frequency resources with system information belonging to other groups by means of Code Division Multiplexing (CDM).

In another embodiment, the time-frequency resource of the m-th piece of system information in the k pieces of system information in the i-th group of system information is the same as the time-frequency resources of other pieces of system information except for the k pieces of system information, and the code domain resource of the m-th piece of system information is different from that of other pieces of system information, and m is a positive integer less than or equal to k.

Specifically, grouping of system information on the time domain and/or the frequency domain may be multiplexed by means of code division multiplexing. That is, system information belonging to different groups occupies the same time-frequency resource for transmission, but is distinguished by using different code domain resources, i.e., different coding manners. The code division multiplexing can direct at the frequency domain and/or the time domain. The two pieces of system information adjacent on the frequency domain can be transmitted on the time-frequency resource by means of code division multiplexing, and the two pieces of system information adjacent on the time domain can also be transmitted on the time-frequency resource by means of code division multiplexing.

For example, Fig. 7 is a schematic diagram of time-frequency resources for transmitting system information according to the present disclosure. Corresponding to Fig. 3, the first group of system information and the third group of system information may be multiplexed by CDM, and the second group of system information and the fourth group of system information can also be multiplexed by CDM.

It can be seen that, in the time-frequency resource shown in Fig. 7, it may still be satisfied that the terminal device can receive all groups of system information on any system information time-domain resource T1, T2, T3 or T4, and that the terminal device can also receive all four groups of system information on any system information frequency-domain resource F1, F2, F3 or F4.

220, the network device sends the n groups of system information on the time-frequency resources.

The network device sends the n groups of system information on the determined time-frequency resources for transmitting the n groups of system information. It should be understood that, the network device may send corresponding pieces of system information according to a location of the time-frequency resource used for transmitting each piece of system information in the foregoing time-frequency resource, according to a certain period. That is, the network device may periodically or continuously transmit the resource matrix described in the foregoing embodiments. For example, the network device can periodically transmit the n groups of system information in accordance with the resource matrix as shown in Fig. 3, Fig. 4, Fig. 5, Fig. 6, or Fig 7.

230, the terminal device determines time-frequency resources for receiving the n groups of system information.

Optionally, the terminal device determines time-frequency resources for receiving the n groups of system information, that is, the step 230 may include the following sub steps.

the network device sends indication information that is carried in the i-th group of system information.

the terminal device receives the indication information carried in the i-th group of system information sent by the network device.

The indication information is used to indicate the location of the time-frequency resource of each piece of system information in the n groups of system information.

240, the terminal device receives the n groups of system information sent by the network device on the time-frequency resource.

Specifically, after receiving the indication information carried in the i-th group of system information sent by the network device, the terminal device can determine the location of the time frequency resource for receiving each piece of system information in the n groups of system information according to the indication information, thereby receiving the n groups of system information sent by the network device.

The network device may send indication information carried in the i-th group of system information according to an interval between the indication information and specific system information in a time domain and/or a frequency domain; and the terminal device may send indication information carried in the i-th group of system information sent by the network device according to an interval between the indication information and specific system information in a time domain and/or a frequency domain.

Specifically, when the terminal device receives the system information, the time-frequency resource used by each piece of system information in the n groups of system information, that is, the indication information, needs to be obtained firstly. A distribution relationship between each time-frequency resource can be pre-agreed in a protocol. Alternatively, the network device can carry the distribution relationship of the system information in a certain group of system information. For example, the first group of system information carries the indication information. Once the terminal device receives the first group of system information, the terminal device can learn the location of the time-frequency resource used by each piece of system information in the n groups of system information indicated by the indication information. The time-frequency resource for transmitting the first group of system information may be protocol-defined, or may have an implicit indication relationship with some specific system signals. For example, the indication relationship is a positional relationship on the time domain and/or frequency domain which has an appointment with a synchronization signal of the system, that is, a primary synchronization signal (Primary Synchronization Signal ("PSS") or Secondary Synchronization Signal ("SSS"). For example, after the terminal device detects the synchronization signal of the system, it can be determined that the location of the time-frequency resource for receiving the indication information is at a position following a fixed time and/or frequency after the synchronization signal, and after the terminal device receives the indication information, the location of the time-frequency resource for receiving each piece of system information in the n groups of system information, or the distribution relationship between the time-frequency resources, can be detected at the location indicated by the indication information.

In the present disclosure, in 210, in time-frequency resources for transmitting n groups of system information determined by a network device, an i-th group of system information in the n groups of system information may also occupy continuous system information frequency-domain resources in a frequency domain, and system information time-domain resources occupied by system information in the i-th group of system information are different from each other, and the i-th group of system information includes k pieces of system information, where n is a positive integer, k is a positive integer, and i is a positive integer less than or equal to n.

In this way, it can also satisfy that the terminal device can receive the system information of all groups on any system information time-domain resource, and the terminal device can receive the system information of all groups on any system information frequency-domain resource. In the time-frequency resources for transmitting the n groups of system information, it can satisfy that the n groups of the system information can be transmitted on each of the system information time-domain resources and the system information frequency-domain resources.

For a detailed description of the embodiment, reference may be made to the description of the time-frequency resource for transmitting the system information in 210. For brevity, details are not described herein again.

It should be understood that, in various embodiments of the present disclosure, the size of the sequence numbers of the above processes does not mean the order of execution, and the order of execution of each process should be determined by its function and internal logic, and should not constitute any limitation on implementation processes of embodiments of the present disclosure.

The method for transmitting data according to the present disclosure has been described in detail above, and a network device and a terminal device according to an embodiment of the present disclosure will be described below. It should be understood that the network device and the terminal device in the embodiments of the present disclosure may perform various methods in the foregoing embodiments of the present disclosure. That is, specific working processes of the following various devices may refer to the corresponding processes in the foregoing method embodiments.

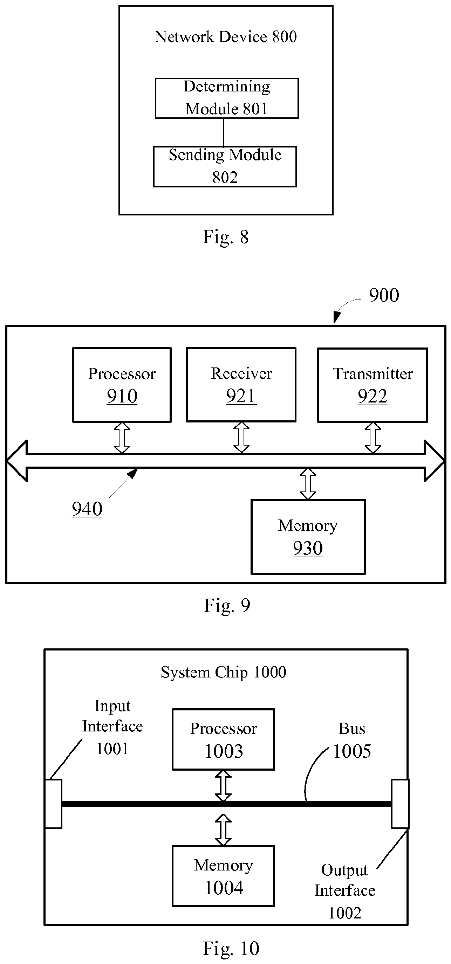

Fig. 8 shows a schematic block diagram of a network device 800 in accordance with the present disclosure. As shown in Fig. 8, the network device 800 includes a determining module 801 and a sending module 802.

The determining module 801 is configured to determine time-frequency resources for transmitting n groups of system information, wherein an i-th group of system information in the n groups of system information occupies continuous system information time-domain resources in a time domain, and system information frequency-domain resources occupied by system information in the i-th group of system information are different from each other, and the i-th group of system information includes k pieces of system information, where n is a positive integer, k is a positive integer, and i is a positive integer less than or equal to n.

The sending module 802 is configured to send the n groups of system information on the time-frequency resources determined by the determining module 801.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, the system information in the i-th group of system information occupies continuous system information frequency-domain resources.

Optionally, the sending module 802 is further configured to: send indication information carried in the i-th group of system information, wherein the indication information is used to indicate a time-frequency resource of each piece of system information in the n groups of system information.

Optionally, the sending module 802 is specifically configured to: send indication information carried in the i-th group of system information according to an interval between the indication information and specific system information in a time domain and/or a frequency domain.

Optionally, the specific system information includes a primary synchronization signal PSS or a secondary synchronization signal SSS.

It should be noted that in the present disclosure, the determining module 801 can be implemented by a processor, and the sending module 802 can be implemented by a transceiver. As shown in Fig. 9, network device 900 can include a processor 910, a transceiver, and a memory 930. The transceiver can include a receiver 921 and a transmitter 922. The memory 930 can be used to store related information such as basic parameters and filtering modes, and can also be used to store codes executed by the processor 910 and the like. The various components in the network device 900 are coupled together by a bus system 940. The bus system 940 further includes a power bus, a control bus, a status signal bus, and the like, in addition to the data bus.

Optionally, the system information in the i-th group of system information occupies continuous system information frequency-domain resources.

Optionally, the transceiver is further configured to: send indication information carried in the i-th group of system information, wherein the indication information is used to indicate a time-frequency resource of each piece of system information in the n groups of system information.

Optionally, the transceiver is specifically configured to: send indication information carried in the i-th group of system information according to an interval between the indication information and specific system information in a time domain and/or a frequency domain.

Optionally, the specific system information includes a primary synchronization signal PSS or a secondary synchronization signal SSS.

Fig. 10 is a schematic structural diagram of a system chip according to the present disclosure. The system chip 1000 of Fig. 10 includes an input interface 1001, an output interface 1002, at least one processor 1003, and a memory 1004. The input interface 1001, the output interface 1002, the processor 1003, and the memory 1004 are connected by a bus 1005. The processor 1003 is configured to execute codes in the memory 1004. When the codes are executed, the processor 1003 implements the method performed by the network device in Figs. 2-7.

The network device 800 shown in Fig. 8 or the network device 900 shown in Fig. 9 or the system chip 1000 shown in Fig. 10 can implement the processes implemented by the network device in the foregoing methods of Fig. 2 to Fig. 7, in order to avoid duplication, they will not be repeated herein.

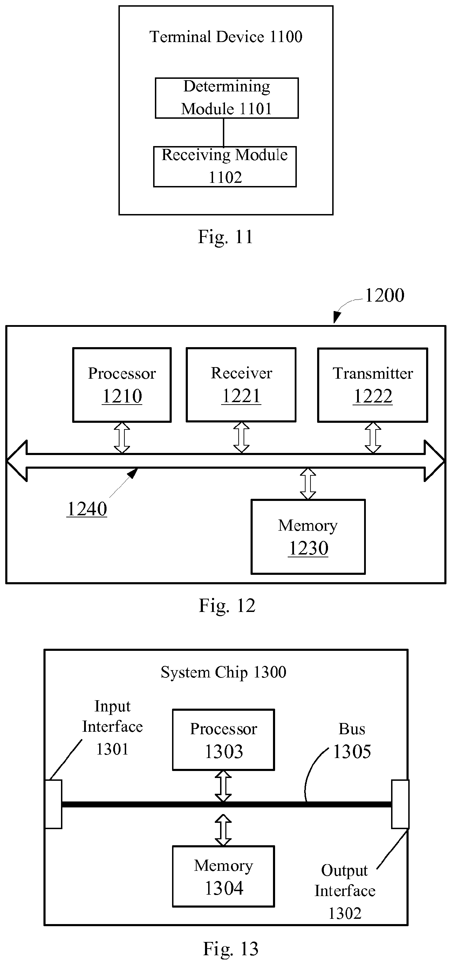

Fig. 11 shows a schematic block diagram of a terminal device 1100 according to the present disclosure. As shown in Fig. 11, the terminal device 1100 includes a determining module 1101 and a receiving module 1102.

The determining module 1101 is configured to determine time-frequency resources for receiving n groups of system information, wherein an i-th group of system information in the n groups of system information occupies continuous system information time-domain resources in a time domain, and system information frequency-domain resources occupied by system information in the i-th group of system information are different from each other, and the i-th group of system information includes k pieces of system information, where n is a positive integer, k is a positive integer, and i is a positive integer less than or equal to n.

The receiving module 1102 is configured to receive the n groups of system information sent by a network device on the time-frequency resources determined by the determining module 1101.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, the system information in the i-th group of system information occupies continuous system information frequency-domain resources.

Optionally, the receiving module 1102 is specifically configured to: receive indication information carried in the i-th group of system information sent by the network device, wherein the indication information is used to indicate a time-frequency resource of each piece of system information in the n groups of system information; receive the n groups of system information sent by the network device on the time-frequency resources according to the indication information.

Optionally, the receiving module 1102 is specifically configured to: receive indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

It should be noted that, in the present disclosure, the receiving module 1102 may be implemented by a transceiver, and the determining module 1101 may be implemented by a processor. As shown in Fig. 12, network device 1200 can include a processor 1210, a transceiver, and a memory 1230. The transceiver can include a receiver 1221 and a transmitter 1222. The memory 1230 can be used to store related information such as basic parameters and filtering modes, and can also be used to store codes executed by the processor 1210 and the like. The various components in the network device 1200 are coupled together by a bus system 1240. The bus system 1240 further includes a power bus, a control bus, a status signal bus, and the like, in addition to the data bus.

The processor 1210 is configured to determine time-frequency resources for receiving n groups of system information, wherein an i-th group of system information in the n groups of system information occupies continuous system information time-domain resources in a time domain, and system information frequency-domain resources occupied by system information in the i-th group of system information are different from each other, and the i-th group of system information includes k pieces of system information, where n is a positive integer, k is a positive integer, and i is a positive integer less than or equal to n.

The transceiver is configured to receive the n groups of system information sent by a network device on the time-frequency resources determined by the processor 1210.

Optionally, the system information in the i-th group of system information occupies continuous system information frequency-domain resources.

Optionally, the transceiver is specifically configured to: receive indication information carried in the i-th group of system information sent by the network device, wherein the indication information is used to indicate a time-frequency resource of each piece of system information in the n groups of system information; receive the n groups of system information sent by the network device on the time-frequency resources according to the indication information.

Optionally, the transceiver is specifically configured to: receive indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

Fig. 13 is a schematic structural diagram of a system chip according to the present disclosure. The system chip 1300 of Fig. 13 includes an input interface 1301, an output interface 1302, at least one processor 1303, and a memory 1304. The input interface 1301, the output interface 1302, the processor 1303, and the memory 1304 are connected by a bus 1305. The processor 1303 is configured to execute codes in the memory 1304. When the codes are executed, the processor 1303 implements the method performed by the terminal device in Figs. 2-7.

The terminal device 1100 shown in Fig. 11 or the terminal device 1200 shown in Fig. 12 or the system chip 1300 shown in Fig. 13 can implement the processes implemented by the terminal device in the foregoing methods of Fig. 2 to Fig. 7, in order to avoid repetition, they will not be repeated herein.

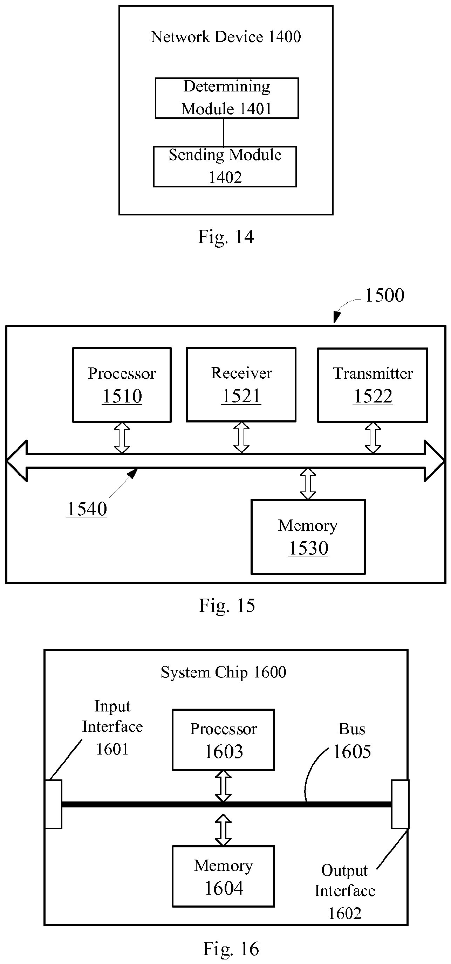

Fig. 14 shows a schematic block diagram of a network device 1400 in accordance with the present disclosure. As shown in Fig. 14, the network device 1400 includes a determining module 1401 and a sending module 1402.

The determining module 1401 is configured to determine time-frequency resources for transmitting n groups of system information, wherein an i-th group of system information in the n groups of system information occupies continuous system information frequency-domain resources in a frequency domain, and system information time-domain resources occupied by system information in the i-th group of system information are different from each other, and the i-th group of system information includes k pieces of system information, where n is a positive integer, k is a positive integer, and i is a positive integer less than or equal to n.

The sending module 1402 is configured to send the n groups of system information on the time-frequency resources determined by the determining module 1401.

Therefore, on the system information time-domain resources, the terminal device can receive system information of all groups, and on any system information frequency-domain resource, the terminal device can also receive system information of all groups, thereby simultaneously satisfying different requirements of different types of terminal devices for obtaining system information.

Optionally, the sending module 1402 is further configured to:
send indication information carried in the i-th group of system information, wherein the indication information is used to indicate a time-frequency resource of each piece of system information in the n groups of system information.

Optionally, the sending module 1402 is specifically configured to: send indication information carried in the i-th group of system information according to an interval between the indication information and specific system information in a time domain and/or a frequency domain.

Optionally, the specific system information includes a primary synchronization signal PSS or a secondary synchronization signal SSS.

It should be noted that, in the present disclosure, the sending module 1402 may be implemented by a transceiver, and the determining module 1401 may be implemented by a processor. As shown in Fig. 15, network device 1500 can include a processor 1510, a transceiver, and a memory 1530. The transceiver may include a receiver 1521 and a transmitter 1522. The memory 1530 may be used to store related information such as basic parameters and filtering modes, and may also be used to store codes executed by the processor 1510 and the like. The various components in network device 1500 are coupled together by a bus system 1540. The bus system 1540 further includes a power bus, a control bus, a status signal bus, and the like, in addition to the data bus.

Fig. 16 is a schematic block diagram of a system chip of the present disclosure. The system chip 1600 of Fig. 16 includes an input interface 1601, an output interface 1602, at least one processor 1603, and a memory 1604. The input interface 1601, the output interface 1602, the processor 1603, and the memory 1604 are connected by a bus 1605. The processor 1603 is configured to execute codes in the memory 1604. When the codes are executed, the processor 1603 implements the method performed by the network device in Figs. 2-7.

The network device 1400 shown in Fig. 14 or the network device 1500 shown in Fig. 15 or the system chip 1600 shown in Fig. 16 can implement the processes implemented by the network device in the foregoing methods of Fig. 2 to Fig. 7, in order to avoid duplication, they will not be repeated herein.

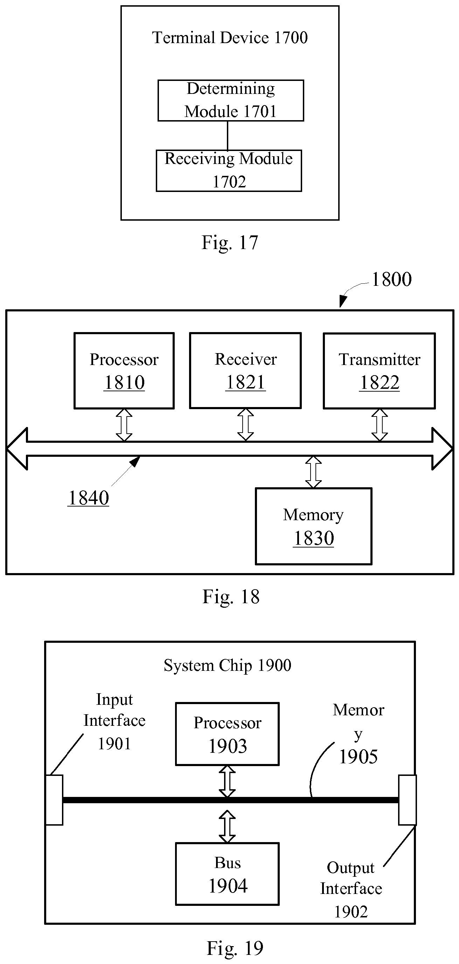

Fig. 17 shows a schematic block diagram of a terminal device 1700 according to the present disclosure. As shown in Fig. 17, the terminal device 1700 includes a determining module 1701 and a receiving module 1702.

The determining module 1701 is configured to determine time-frequency resources for receiving n groups of system information, wherein an i-th group of system information in the n groups of system information occupies continuous system information frequency-domain resources in a frequency domain, and system information time-domain resources occupied by system information in the i-th group of system information are different from each other, and the i-th group of system information includes k pieces of system information, where n is a positive integer, k is a positive integer, and i is a positive integer less than or equal to n.

The receiving module 1702 is configured to receive the n groups of system information sent by a network device on the time-frequency resources determined by the determining module 1701.

Optionally, the receiving module 1702 is specifically configured to: receive indication information carried in the i-th group of system information sent by the network device, wherein the indication information is used to indicate a time-frequency resource of each piece of system information in the n groups of system information; receive the n groups of system information sent by the network device on the time-frequency resources according to the indication information.

Optionally, the receiving module 1702 is specifically configured to: receive indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

It should be noted that, in the present disclosure, the receiving module 1702 may be implemented by a transceiver, and the determining module 1701 may be implemented by a processor. As shown in Fig. 18, network device 1800 can include a processor 1810, a transceiver, and a memory 1830. The transceiver can include a receiver 1821 and a transmitter 1822. The memory 1830 can be used to store related information such as basic parameters and filtering modes, and can also be used to store codes executed by the processor 1810 and the like. The various components in network device 1800 are coupled together by a bus system 1840. The bus system 1840 further includes a power bus, a control bus, a status signal bus, and the like, in addition to the data bus.

The processor 1810 is configured to determine time-frequency resources for receiving n groups of system information, wherein an i-th group of system information in the n groups of system information occupies continuous system information frequency-domain resources in a frequency domain, and system information time-domain resources occupied by system information in the i-th group of system information are different from each other, and the i-th group of system information includes k pieces of system information, where n is a positive integer, k is a positive integer, and i is a positive integer less than or equal to n.

The transceiver is configured to receive the n groups of system information sent by a network device on the time-frequency resources determined by the determining module 1601.

Optionally, the transceiver is specifically configured to: receive indication information carried in the i-th group of system information sent by the network device, wherein the indication information is used to indicate a time-frequency resource of each piece of system information in the n groups of system information; receive the n groups of system information sent by the network device on the time-frequency resources according to the indication information.

Optionally, the transceiver is specifically configured to: receive indication information carried in the i-th group of system information sent by the network device according to an interval between the indication information and specific system information in a time domain and/or a frequency domain.

Optionally, the specific system information includes a primary synchronization signal PSS or a secondary synchronization signal SSS.

Fig. 19 is a schematic structural diagram of a system chip of the present disclosure. The system chip 1900 of Fig. 19 includes an input interface 1901, an output interface 1902, at least one processor 1903, and a memory 1904. The input interface 1901, the output interface 1902, the processor 1903, and the memory 1904 are connected by a bus 1905. The processor 1903 is configured to execute codes in the memory 1904. When the codes are executed, the processor 1903 implements the method performed by the terminal device in Figs. 2-7.

The terminal device 1700 shown in Fig. 17 or the terminal device 1800 shown in Fig. 18 or the system chip 1900 shown in Fig. 19 can implement the processes implemented by the terminal device in the foregoing methods of Fig. 2 to Fig. 7, in order to avoid repetition, they will not be repeated herein.

It can be understood that the processor in the present disclosure may be an integrated circuit chip with signal processing capability. In the implementation process, each step of the foregoing methods may be completed by an integrated logic circuit of hardware in a processor or an instruction in a form of software. The above processor may be a general-purpose processor, a digital signal processor ("DSP"), an application specific integrated circuit (ASIC), a field programmable gate array ("FPGA"), or other programmable logic devices, discrete gates or transistor logic devices, discrete hardware components. The methods, steps, and logical block diagrams disclosed in the embodiments of the present disclosure may be implemented or carried out. The general purpose processor may be a microprocessor or the processor may also be any conventional processor or the like. The steps of the method disclosed in combination with the embodiments of the present disclosure may be directly implemented by the hardware decoding processor, or may be performed by a combination of hardware and software modules in the decoding processor. The software module can be located in a conventional storage medium in the art, such as random access memory, flash memory, read only memory, programmable read only memory or electrically erasable programmable memory, registers, and the like. The storage medium is located in the memory, and the processor reads the information in the memory and combines the hardware to complete the steps of the above method.

It is to be understood that the memory in the present disclosure may be a volatile memory or a non-volatile memory, or may include both the volatile and the non-volatile memory. The non-volatile memory may be a read-only memory ("ROM"), a programmable read only memory ("PROM"), an Erasable PROM ("EPROM"), an electrically EPROM ("EEPROM") or flash memory. The volatile memory may be a Random Access Memory ("RAM"), which is used as an external cache. By way of example and not for limitation, many forms of RAM may be used, such as static RAM ("SRAM"), dynamic RAM ("DRAM"), Synchronous DRAM ("SDRAM"), Double Data Rate SDRAM (DDR SDRAM), Enhanced SDRAM ("ESDRAM"), Synchlink DRAM ("SLDRAM") and Direct Rambus RAM ("DR RAM"). It should be noted that the memories of the systems and methods described herein are intended to include, without being limited to, these and any other suitable types of memory.

Additionally, the terms "system" and "network" herein are usually interchangeably for use herein. The term "and/or" in this context is merely an association describing the associated objects, indicating that there may be three relationships, for example, A and/or B, which may indicate that A exists separately, both A and B exist, and B exists separately. In addition, the character "/" herein generally indicates an "or" relationship of contextual objects.

It should be understood that in the embodiment of the present disclosure, "B corresponding to A" means that B is associated with A, and B can be determined according to A. However, it should also be understood that determining B from A does not mean that B is determined solely from A, and that B can also be determined based on A and/or other information.

Those of ordinary skill in the art will appreciate that the units and algorithm steps of the various examples described in connection with the embodiments disclosed herein can be implemented in electronic hardware or a combination of computer software and electronic hardware. Whether these functions are performed in hardware or software depends on the specific application and design constraints of the technical solution. A person skilled in the art can use different methods for implementing the described functions for each particular application, but such implementation should not be considered to go beyond the scope of the present disclosure.

A person skilled in the art can clearly understand that for the convenience and brevity of the description, the specific working process of the system, the device and the unit described above can refer to the corresponding process in the foregoing method embodiment, and details are not described herein again.

In the several embodiments provided by the present disclosure, it should be understood that the disclosed systems, devices, and methods may be implemented in other manners. For example, the device embodiments described above are merely illustrative. For example, the division of the unit is only a logical function division. In actual implementation, there may be another division manner. For example, a plurality of units or components may be combined or integrated into another system, or some features can be ignored or not executed. In addition, the coupling or direct coupling or communication connection shown or discussed may be an indirect coupling or communication connection through some interfaces, devices or units, which may be electrical, mechanical or otherwise.

The units described as separate components may or may not be physically separated, and the components displayed as units may or may not be physical units. That is, they may be located in one place, or may be distributed to multiple network units. Some or all of the units may be selected according to actual needs to achieve the purpose of the technical solution of the embodiment.

In addition, each functional unit in each embodiment of the present disclosure may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, the technical solution of the present disclosure which is essential or a part contributes to the prior art, or a part of the technical solution, may be embodied in the form of a software product, which is stored in a storage medium, including instructions to cause a computer device (which may be a personal computer, server, or network device, etc.) to perform all or part of the steps of the methods described in various embodiments of the present disclosure. The foregoing storage medium includes: a U disk, a mobile hard disk, a Read-Only Memory ("ROM"), a Random Access Memory ("RAM"), a disk, or an optical disk or other media that can store program codes.

## Claims

1. A method for transmitting system information, comprising
a terminal device (1100, 1700) determining time-frequency resources for receiving n groups of system information, wherein an i-th group of system information in the n groups of system information occupies continuous system information time-domain resources in a time domain, and system information frequency-domain resources occupied by system information in the i-th group of system information are different from each other in respective time-domain resources, and the i-th group of system information comprises k pieces of system information, where n is a positive integer, k is a positive integer , and i is a positive integer less than or equal to n;
the terminal device (1100, 1700) receiving the n groups of system information sent by a network device (800, 1400) on the time-frequency resources,
wherein the system information in the i-th group of system information occupies continuous system information frequency-domain resources, and
wherein n groups of system information are mapped to time-domain resources and frequency-domain resources in a cyclically shifted manner.

2. The method according to claim 1, wherein k is less than or equal to n.

3. The method according to claim 1 or 2, wherein before the terminal device (1100, 1700) receiving the n groups of system information sent by a network device (800, 1400) on the time-frequency resources, the method further comprises:
the terminal device (1100, 1700) receiving indication information carried in the i-th group of system information sent by the network device (800, 1400), wherein the indication information is configured to indicate a time-frequency resource of each piece of system information in the n groups of system information;
wherein the terminal device (1100, 1700) receiving the n groups of system information sent by a network device (800, 1400) on the time-frequency resources comprises:
the terminal device (1100, 1700) receiving the n groups of system information sent by the network device (800, 1400) on the time-frequency resources according to the indication information.

4. The method according to claim 3, wherein the terminal device (1100, 1700) receiving indication information carried in the i-th group of system information sent by the network device (800, 1400) comprises:
the terminal device (1100, 1700) receiving indication information carried in the i-th group of system information sent by the network device (800, 1400) according to an interval between the indication information and specific system information in at least one of the time domain and a frequency domain.

5. The method according to claim 4, wherein the specific system information comprises a primary synchronization signal PSS or a secondary synchronization signal SSS.

6. A method for transmitting system information, comprising:
a network device (800, 1400) determining time-frequency resources for transmitting n groups of system information, wherein an i-th group of system information in the n groups of system information occupies continuous system information frequency-domain resources in a frequency domain, and system information time-domain resources occupied by system information in the i-th group of system information are different from each other in respective frequency-domain resources, and the i-th group of system information comprises k pieces of system information, where n is a positive integer, k is a positive integer , and i is a positive integer less than or equal to n;
the network device (800, 1400) sending the n groups of system information on the time-frequency resources, and
wherein the system information in the i-th group of system information occupies continuous system information time-domain resources, and
wherein n groups of system information are mapped to time-domain resources and frequency-domain resources in a cyclically shifted manner.

7. The method according to claim 6, wherein the method further comprises:
the network device (800, 1400) sending indication information carried in the i-th group of system information, wherein the indication information is configured to indicate a time-frequency resource of each piece of system information in the n groups of system information.

8. A method for transmitting system information, comprising:
a terminal device (1100, 1700) determining time-frequency resources for receiving n groups of system information, wherein an i-th group of system information in the n groups of system information occupies continuous system information frequency-domain resources in a frequency domain, and system information time-domain resources occupied by system information in the i-th group of system information are different from each other in respective frequency-domain resources, and the i-th group of system information comprises k pieces of system information, where n is a positive integer, k is a positive integer , and i is a positive integer less than or equal to n;
the terminal device (1100, 1700) receiving the n groups of system information sent by a network device (800, 1400) on the time-frequency resources,
wherein the system information in the i-th group of system information occupies continuous system information time-domain resources, and
wherein n groups of system information are mapped to time-domain resources and frequency-domain resources in a cyclically shifted manner.

9. The method according to claim 8, wherein k is less than or equal to n.

10. The method according to claim 8 or 9, wherein before the terminal device (1100, 1700) receiving the n groups of system information sent by a network device (800, 1400) on the time-frequency resources, the method further comprises:
the terminal device (1100, 1700) receiving indication information carried in the i-th group of system information sent by the network device (800, 1400), wherein the indication information is configured to indicate a time-frequency resource of each piece of system information in the n groups of system information;
wherein the terminal device (1100, 1700) receiving the n groups of system information sent by a network device (800, 1400) on the time-frequency resources comprises:
the terminal device (1100, 1700) receiving the n groups of system information sent by the network device (800, 1400) on the time-frequency resources according to the indication information.

11. The method according to claim 10, wherein the terminal device (1100, 1700) receiving indication information carried in the i-th group of system information sent by the network device (800, 1400) comprises:
the terminal device (1100, 1700) receiving indication information carried in the i-th group of system information sent by the network device (800, 1400) according to an interval between the indication information and specific system information in in at least one of a time domain and the frequency domain.

12. The method according to claim 11, wherein the specific system information comprises a primary synchronization signal PSS or a secondary synchronization signal SSS.

13. A network device for transmitting system information, comprising a processor (910, 1510) and a transceiver (921, 922, 1521, 1522), wherein the processor (910, 1510) and the transceiver (921, 922, 1521, 1522) is configured to perform the method according to claim 6 or 7.

14. A terminal device for transmitting system information, comprising a processor (1210, 1810) and a transceiver (1221, 1222, 1821, 1822), wherein the processor and the transceiver (1221, 1222, 1821, 1822) are configured to perform the method according to any one of claims 1-5 and 8-12.

## Patentansprüche

1. Verfahren zum Übertragen von Systeminformationen, das Folgendes umfasst:
Bestimmen, durch eine Endgerätevorrichtung (1100, 1700), von Zeit-Frequenz-Ressourcen zum Empfangen von n Gruppen von Systeminformationen, wobei eine i-te Gruppe von Systeminformationen in den n Gruppen von Systeminformationen ununterbrochene Systeminformationszeitbereichsressourcen in einem Zeitbereich einnimmt und sich Systeminformationsfrequenzbereichsressourcen, die durch Systeminformationen in der i-ten Gruppe von Systeminformationen eingenommen sind, in jeweiligen Zeitbereichsressourcen voneinander unterscheiden und die i-te Gruppe von Systeminformationen k Systeminformationselemente umfasst, wobei n eine positive ganze Zahl ist, k eine positive ganze Zahl ist und i eine positive ganze Zahl kleiner oder gleich n ist;
Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden,
wobei die Systeminformationen in der i-ten Gruppe von Systeminformationen ununterbrochene Systeminformationsfrequenzbereichsressourcen einnehmen und
wobei n Gruppen von Systeminformationen auf zyklisch verschobene Weise auf Zeitbereichsressourcen und Frequenzbereichsressourcen abgebildet werden.

2. Verfahren nach Anspruch 1, wobei k kleiner oder gleich n ist.

3. Verfahren nach Anspruch 1 oder 2, wobei das Verfahren vor dem Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden, ferner Folgendes umfasst:
Empfangen, durch die Endgerätevorrichtung (1100, 1700), von Angabeinformationen, die in der i-ten Gruppe von durch die Netzvorrichtung (800, 1400) gesendeten Systeminformationen geführt werden, wobei die Angabeinformationen zum Angeben einer Zeit-Frequenz-Ressource jedes Systeminformationselements in den n Gruppen von Systeminformationen ausgelegt sind;
wobei das Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden, Folgendes umfasst:
Empfangen, durch die Endgerätevorrichtung (1100, 1700), der n Gruppen von Systeminformationen, die durch die Netzvorrichtung (800, 1400) auf den Zeit-Frequenz-Ressourcen gesendet werden, gemäß den Angabeinformationen.

4. Verfahren nach Anspruch 3, wobei das Empfangen, durch die Endgerätevorrichtung (1100, 1700), von Angabeinformationen, die in der i-ten Gruppe von durch die Netzvorrichtung (800, 1400) gesendeten Systeminformationen geführt werden, Folgendes umfasst:
Empfangen, durch die Endgerätevorrichtung (1100, 1700), von Angabeinformationen, die in der i-ten Gruppe von durch die Netzvorrichtung (800, 1400) gesendeten Systeminformationen geführt werden, gemäß einem Intervall zwischen den Angabeinformationen und spezifischen Systeminformationen in dem Zeitbereich und/oder einem Frequenzbereich.

5. Verfahren nach Anspruch 4, wobei die spezifischen Systeminformationen ein primäres Synchronisationssignal PSS oder ein sekundäres Synchronisationssignal SSS umfassen.

6. Verfahren zum Übertragen von Systeminformationen, das Folgendes umfasst:
Bestimmen, durch eine Netzvorrichtung (800, 1400), von Zeit-Frequenz-Ressourcen zum Übertragen von n Gruppen von Systeminformationen, wobei eine i-te Gruppe von Systeminformationen in den n Gruppen von Systeminformationen ununterbrochene Systeminformationsfrequenzbereichsressourcen in einem Frequenzbereich einnehmen und sich Systeminformationszeitbereichsressourcen, die durch Systeminformationen in der i-ten Gruppe von Systeminformationen eingenommen sind, in jeweiligen Frequenzbereichsressourcen voneinander unterscheiden und die i-te Gruppe von Systeminformationen k Systeminformationselemente umfasst, wobei n eine positive ganze Zahl ist, k eine positive ganze Zahl ist und i eine positive ganze Zahl kleiner oder gleich n ist;
Senden, durch die Netzvorrichtung (800, 1400), der n Gruppen von Systeminformationen auf den Zeit-Frequenz-Ressourcen und
wobei die Systeminformationen in der i-ten Gruppe von Systeminformationen ununterbrochene Systeminformationszeitbereichsressourcen einnehmen und wobei n Gruppen von Systeminformationen auf zyklisch verschobene Weise auf Zeitbereichsressourcen und Frequenzbereichsressourcen abgebildet werden.

7. Verfahren nach Anspruch 6, wobei das Verfahren ferner Folgendes umfasst:
Senden, durch die Netzvorrichtung (800, 1400), von Angabeinformationen, die in der i-ten Gruppe von Systeminformationen geführt werden, wobei die Angabeinformationen zum Angeben einer Zeit-Frequenz-Ressource jedes Systeminformationselements in den n Gruppen von Systeminformationen ausgelegt sind.

8. Verfahren zum Übertragen von Systeminformationen, das Folgendes umfasst:
Bestimmen, durch eine Endgerätevorrichtung (1100, 1700), von Zeit-Frequenz-Ressourcen zum Empfangen von n Gruppen von Systeminformationen, wobei eine i-te Gruppe von Systeminformationen in den n Gruppen von Systeminformationen ununterbrochene Systeminformationsfrequenzbereichsressourcen in einem Frequenzbereich einnehmen und sich Systeminformationszeitbereichsressourcen, die durch Systeminformationen in der i-ten Gruppe von Systeminformationen eingenommen sind, in jeweiligen Frequenzbereichsressourcen voneinander unterscheiden und die i-te Gruppe von Systeminformationen k Systeminformationselemente umfasst, wobei n eine positive ganze Zahl ist, k eine positive ganze Zahl ist und i eine positive ganze Zahl kleiner oder gleich n ist;
Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden,
wobei die Systeminformationen in der i-ten Gruppe von Systeminformationen ununterbrochene Systeminformationszeitbereichsressourcen einnehmen und
wobei n Gruppen von Systeminformationen auf zyklisch verschobene Weise auf Zeitbereichsressourcen und Frequenzbereichsressourcen abgebildet werden.

9. Verfahren nach Anspruch 8, wobei k kleiner oder gleich n ist.

10. Verfahren nach Anspruch 8 oder 9, wobei das Verfahren vor dem Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden, ferner Folgendes umfasst:
Empfangen, durch die Endgerätevorrichtung (1100, 1700), von Angabeinformationen, die in der i-ten Gruppe von durch die Netzvorrichtung (800, 1400) gesendeten Systeminformationen geführt werden, wobei die Angabeinformationen zum Angeben einer Zeit-Frequenz-Ressource jedes Systeminformationselements in den n Gruppen von Systeminformationen ausgelegt sind;
wobei das Empfangen, durch die Endgerätevorrichtung (1100, 1700), der n Gruppen von Systeminformationen, die durch eine Netzvorrichtung (800, 1400) auf den Zeit-Frequenz-Ressourcen gesendet werden, Folgendes umfasst:
Empfangen, durch die Endgerätevorrichtung (1100, 1700), der n Gruppen von Systeminformationen, die durch die Netzvorrichtung (800, 1400) auf den Zeit-Frequenz-Ressourcen gesendet werden, gemäß den Angabeinformationen.

11. Verfahren nach Anspruch 10, wobei das Empfangen, durch die Endgerätevorrichtung (1100, 1700), von Angabeinformationen, die in der i-ten Gruppe von durch die Netzvorrichtung (800, 1400) gesendeten Systeminformationen geführt werden, Folgendes umfasst:
Empfangen, durch die Endgerätevorrichtung (1100, 1700), von Angabeinformationen, die in der i-ten Gruppe von durch die Netzvorrichtung (800, 1400) gesendeten Systeminformationen geführt werden, gemäß einem Intervall zwischen den Angabeinformationen und spezifischen Systeminformationen in dem Zeitbereich und/oder dem Frequenzbereich.

12. Verfahren nach Anspruch 11, wobei die spezifischen Systeminformationen ein primäres Synchronisationssignal PSS oder ein sekundäres Synchronisationssignal SSS umfassen.

13. Netzvorrichtung zum Übertragen von Systeminformationen, die einen Prozessor (910, 1510) und einen Sendeempfänger (921, 922, 1521, 1522) umfasst, wobei der Prozessor (910, 1510) und der Sendeempfänger (921, 922, 1521, 1522) zum Durchführen des Verfahrens nach Anspruch 6 oder 7 ausgelegt sind.

14. Endgerätevorrichtung zum Übertragen von Systeminformationen, die einen Prozessor (1210, 1810) und einen Sendeempfänger (1221, 1222, 1821, 1822) umfasst, wobei der Prozessor und der Sendeempfänger (1221, 1222, 1821, 1822) zum Durchführen des Verfahrens nach einem der Ansprüche 1-5 und 8-12 ausgelegt sind.

## Revendications

1. Procédé de transmission d'informations système, comprenant :
la détermination par un dispositif terminal (1100, 1700) de ressources temps-fréquence pour recevoir n groupes d'informations système, dans lequel un i-ème groupe d'informations système dans les n groupes d'informations système occupe des ressources de domaine temporel d'informations système continues dans un domaine temporel, et des ressources de domaine fréquentiel d'informations système occupées par des informations système dans le i-ième groupe d'informations système sont différentes les unes des autres dans des ressources de domaine temporel respectives, et le i-ème groupe d'informations système comprend k éléments d'informations système, où n est un entier positif, k est un entier positif et i est un entier positif inférieur ou égal à n ;
la réception par le dispositif terminal (1100, 1700) des n groupes d'informations système envoyés par un dispositif de réseau (800, 1400) sur les ressources temps-fréquence,
dans lequel les informations système dans le i-ème groupe d'informations système occupent des ressources de domaine fréquentiel d'informations système continues, et
dans lequel n groupes d'informations système sont mappés sur des ressources de domaine temporel et des ressources de domaine fréquentiel d'une manière cycliquement décalée.

2. Procédé selon la revendication 1, dans lequel k est inférieur ou égal à n.

3. Procédé selon la revendication 1 ou 2, le procédé comprenant en outre, avant la réception par le dispositif terminal (1100, 1700) des n groupes d'informations système envoyés par un dispositif réseau (800, 1400) sur les ressources temps-fréquence :
la réception par le dispositif terminal (1100, 1700) d'informations d'indication convoyées dans le i-ème groupe d'informations système envoyé par le dispositif réseau (800, 1400), les informations d'indication étant configurées pour indiquer une ressource temps-fréquence de chaque élément d'informations système dans les n groupes d'informations système ;
dans lequel la réception par le dispositif terminal (1100, 1700) des n groupes d'informations système envoyés par un dispositif de réseau (800, 1400) sur les ressources temps-fréquence comprend :
la réception par le dispositif terminal (1100, 1700) des n groupes d'informations système envoyés par le dispositif de réseau (800, 1400) sur les ressources temps-fréquence conformément aux informations d'indication.

4. Procédé selon la revendication 3, dans lequel la réception par le dispositif terminal (1100, 1700) des informations d'indication convoyées dans le i-ème groupe d'informations système envoyé par le dispositif réseau (800, 1400) comprend :
la réception par le dispositif terminal (1100, 1700) d'informations d'indication convoyées dans le i-ème groupe d'informations système envoyé par le dispositif de réseau (800, 1400) selon un intervalle entre les informations d'indication et des informations système spécifiques dans au moins un domaine parmi le domaine temporel et le domaine fréquentiel.

5. Procédé selon la revendication 4, dans lequel les informations système spécifiques comprennent un signal de synchronisation primaire PSS ou un signal de synchronisation secondaire SSS.

6. Procédé de transmission d'informations système, comprenant :
la détermination par un dispositif réseau (800, 1400) de ressources temps-fréquence pour la transmission de n groupes d'informations système, dans lequel un i-ème groupe d'informations système dans les n groupes d'informations système occupe des ressources de domaine fréquentiel d'informations système continues dans un domaine fréquentiel, et des ressources de domaine temporel d'informations système occupées par des informations système dans le i-ème groupe d'informations système sont différentes les unes des autres dans des ressources respectives de domaine fréquentiel, et le i-ème groupe d'informations système comprend k éléments d'informations système, où n est un entier positif, k est un entier positif et i est un entier positif inférieur ou égal à n ;
l'envoi par le dispositif de réseau (800, 1400) des n groupes d'informations système sur les ressources temps-fréquence, et
dans lequel les informations système du i-ème groupe d'informations système occupent des ressources de domaine temporel d'informations système continues, et
dans lequel n groupes d'informations système sont mappés sur des ressources de domaine temporel et des ressources de domaine fréquentiel d'une manière décalée cycliquement.

7. Procédé selon la revendication 6, le procédé comprenant en outre :
l'envoi par le dispositif de réseau (800, 1400) d'informations d'indication convoyées dans le i-ème groupe d'informations système, les informations d'indication étant configurées pour indiquer une ressource temps-fréquence de chaque élément d'informations système dans les n groupes d'informations système.

8. Procédé de transmission d'informations système, comprenant :
la détermination par un dispositif terminal (1100, 1700) de ressources temps-fréquence pour recevoir n groupes d'informations système, dans lequel un i-ème groupe d'informations système dans les n groupes d'informations système occupe des ressources de domaine fréquentiel d'informations système continues dans un domaine fréquentiel, et des ressources de domaine temporel d'informations système occupées par des informations système dans le i-ième groupe d'informations système sont différentes les unes des autres dans des ressources de domaine fréquentiel respectives, et le i-ème groupe d'informations système comprend k éléments d'informations système, où n est un entier positif, k est un entier positif et i est un entier positif inférieur ou égal à n ;
la réception par le dispositif terminal (1100, 1700) des n groupes d'informations système envoyés par un dispositif de réseau (800, 1400) sur les ressources temps-fréquence.
dans lequel les informations système du i-ème groupe d'informations système occupent des ressources de domaine temporel d'informations système continues, et
dans lequel n groupes d'informations système sont mappés sur des ressources de domaine temporel et des ressources de domaine fréquentiel d'une manière décalée cycliquement.

9. Procédé selon la revendication 8, dans lequel k est inférieur ou égal à n.

10. Procédé selon la revendication 8 ou 9, le procédé comprenant en outre, avant la réception par le dispositif terminal (1100, 1700) des n groupes d'informations système envoyés par un dispositif réseau (800, 1400) sur les ressources temps-fréquence :
la réception par le dispositif terminal (1100, 1700) d'informations d'indication convoyées dans le i-ème groupe d'informations système envoyé par le dispositif de réseau (800, 1400), dans lequel les informations d'indication sont configurées pour indiquer une ressource temps-fréquence de chaque élément d'informations système dans les n groupes d'informations système ;
dans lequel la réception par le dispositif terminal (1100, 1700) des n groupes d'informations système envoyés par un dispositif de réseau (800, 1400) sur les ressources temps-fréquence comprend :
la réception par le dispositif terminal (1100, 1700) des n groupes d'informations système envoyés par le dispositif de réseau (800, 1400) sur les ressources temps-fréquence conformément aux informations d'indication.

11. Procédé selon la revendication 10, dans lequel la réception par le dispositif terminal (1100, 1700) d'informations d'indication convoyées dans le i-ème groupe d'informations système envoyé par le dispositif réseau (800, 1400) comprend :
la réception par le dispositif terminal (1100, 1700) d'informations d'indication convoyées dans le i-ème groupe d'informations système envoyé par le dispositif de réseau (800, 1400) selon un intervalle entre les informations d'indication et des informations système spécifiques dans au moins un domaine parmi le domaine temporel et le domaine fréquentiel.

12. Procédé selon la revendication 11, dans lequel les informations système spécifiques comprennent un signal de synchronisation primaire PSS ou un signal de synchronisation secondaire SSS.

13. Dispositif de réseau de transmission d'informations système, comprenant un processeur (910, 1510) et un émetteur-récepteur (921, 922, 1521, 1522), dans lequel le processeur (910, 1510) et l'émetteur-récepteur (921, 922, 1521, 1522) sont configurés pour réaliser le procédé selon la revendication 6 ou 7.

14. Dispositif terminal de transmission d'informations système, comprenant un processeur (1210 1810) et un émetteur-récepteur (1221, 1222, 1821, 1822), dans lequel le processeur et l'émetteur-récepteur (1221, 1222, 1821, 1822) sont configurés pour réaliser le procédé selon l'une quelconque des revendications 1 à 5 et 8 à 12.
